(19) Europäisches Patentamt
European Patent Office
Office européen des brevets

(11) Veröffentlichungsnummer: **0 297 365**
**A2**

(12) **EUROPÄISCHE PATENTANMELDUNG**

(21) Anmeldenummer: **88109643.2**

(22) Anmeldetag: **16.06.88**

(51) Int. Cl.⁴: **C08L 71/04 , C08L 57/00 , C08L 67/00**

(30) Priorität: **27.06.87 DE 3721338**

(43) Veröffentlichungstag der Anmeldung:
**04.01.89 Patentblatt 89/01**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann-Strasse 53**
**D-6717 Hessheim(DE)**
Erfinder: **Lausberg, Dietrich, Dr.**
**Nachtigalstrasse 32 a**
**D-6700 Ludwigshafen(DE)**

(54) **Thermoplastische Formmassen auf der Basis von Polyphenylenethern und Polyestern.**

(57) Thermoplastische Formmassen, enthaltend

A) mindestens 5 Gew.% einer Polymerkomponente bestehend aus 50 bis 100 Gew.% Polyphenylenether und 0 bis 50 Gew.% eines von der Komponente C) verschiedenen Styrolpolymerisats,

B) mindestens 5 Gew.% eines Polyesters,

C) mindestens 0,1 Gew.% eines Copolymerisats aufgebaut aus

$C_1$) mindestens 20 Gew.% α-Olefinen mit 2 - 8 C-Atomen, Styrol oder substituierten Styrolen der allgemeinen Formel I

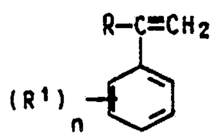

(I)

wobei R und $R^1$ einen Alkylrest mit 1 bis 8 C-Atomen, ein Wasserstoffatom und/oder ein Halogenatom darstellen und n 0, 1, 2 oder 3 ist oder Mischungen dieser Monomeren,

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

EP 0 297 365 A2

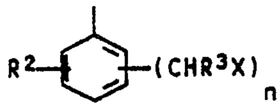

(II)

wobei X ein Halogenatom und $R^2$ und $R^3$ jeweils einen Alkylrest mit 1 bis 8 C-Atomen oder ein Wasserstoffatom darstellen und n 1, 2 oder 3 ist, und/oder

$C_4$) mindestens 0,05 Gew.% eines Oxazolin-Gruppen enthaltenden polymerisierbaren Monomeren und

$C_5$) 0 bis 65 Gew.% Acrylnitril, Methacrylnitril und/oder weiteren nicht-ionogenen Comonomeren und

D) 0 bis 40 Gew.% eines schlagzäh modifizierenden Kautschuks.

## Thermoplastische Formmassen auf der Basis von Polyphenylenethern und Polyestern

Die Erfindung betrifft thermoplastische Formmassen, enthaltend

A) mindestens 5 Gew.% einer polyphenylenetherhaltigen Polymerkomponente und

B) mindestens 5 Gew.% eines Polyesters.

Weiterhin betrifft die Erfindung Formkörper, die diese Formmassen als wesentliche Komponente enthalten.

Polyphenylenether haben hervorragende thermische, mechanische und dielektrische Eigenschaften, sind jedoch in reiner Form nur schwierig zu verarbeiten. Bekannt sind auch Gemische aus Polyphenylenethern und Styrolpolymerisaten; diese haben jedoch den Nachteil, daß ihre Lösungsmittelbeständigkeit sehr gering ist. Ihre Verwendungsbreite ist deshalb sehr begrenzt.

In der US-A 3 819 759 werden Formmassen auf der Basis von Polyestern beschrieben, deren Verarbeitbarkeit durch Zusätze von Triarylphosphat und Polyphenylenoxid und/oder Polycarbonat verbessert wird. Die Mengen dieser Zusätze liegen vorzugsweise im Bereich von 5 - 15 Gew.%. Bei höheren Mengen an Zusätzen werden die Verträglichkeit der Mischungen und damit auch die mechanischen Eigenschaften deutlich verschlechtert.

Das gleiche Problem ist bei den Mischungen aus Polyphenylenether (PPE) und Polyestern zu beobachten, die in der JP-A 49/75 662 (1974) beschrieben werden.

Gemäß der Lehre der JP-A 57/200 447 (1982) werden Blends aus PPE und Polyestern aus Lösung heraus hergestellt; beim Verarbeiten in der Schmelze, welches beim Konfektionieren auf Extrudern erforderlich ist, entmischen sich die beiden Komponenten wieder.

In der EP-A 148 774 werden Blends aus Polyestern, PPE und sog. Phenoxy-Polymeren, d.h. Kondensationsprodukten aus Bisphenol A und Epichlorhydrin, beschrieben. Die mechanischen Eigenschaften dieser Blends sind nicht in vollem Umfang zufriedenstellend.

Aufgabe der vorliegenden Erfindung war es daher, thermoplastische Formmassen zur Verfügung zu stellen, die neben einer guten Verarbeitbarkeit gute thermische, mechanische und dielektrische Eigenschaften aufweisen und sich insbesondere durch eine hohe Schlagzähigkeit und eine hohe Wärmeformbeständigkeit auszeichnen, ohne daß Delaminierungsvorgänge bei aus den Formmassen hergestellten Formkörpern auftreten.

Erfindungsgemäß wird diese Aufgabe gelöst durch thermoplastische Formmassen, enthaltend als wesentliche Komponenten

A) mindestens 5 Gew.% einer Polyphenylenetherkomponente bestehend aus 50 bis 100 Gew.% Polyphenylenether und 0 bis 50 Gew.% eines von der Komponente C) verschiedenen Styrolpolymerisates

B) mindestens 5 Gew.% eines Polyesters,

C) mindestens 0,1 Gew.% eines Copolymerisats aufgebaut aus

$C_1$) mindestens 20 Gew.% α-Olefinen mit 2-8 C-Atomen, Styrol oder substituierten Styrolen der allgemeinen Formel I

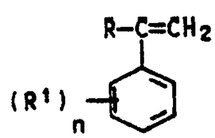

(I)

wobei R und $R^1$ einen Alkylrest mit 1 bis 8 C-Atomen, ein Wasserstoffatom und/oder ein Halogenatom darstellen und n 0, 1, 2 oder 3 ist, oder deren Mischungen

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

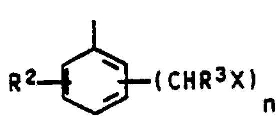

(II)

wobei X ein Halogenatom und $R^2$ und $R^3$ einen Alkylrest mit 1 bis 8 C-Atomen oder ein Wasserstoffatom darstellen und n 1, 2 oder 3 ist,

und/oder

$C_4$) mindestens 0.05 Gew.% eines Oxazolin-Gruppen enthaltenden polymerisierbaren Monomeren,

und

$C_5$) 0 bis 65 Gew.% Acrylnitril, Methacrylnitril und/oder weiteren nicht-ionogenen Comonomeren und

sowie darüber hinaus

D) 0 bis 40 Gew.% eines schlagzäh modifizierenden Kautschuks.

Bevorzugte Massen dieser Art ergeben sich aus den Unteransprüchen.

Die erfindungsgemäßen thermoplastischen Formmassen haben den Vorteil, daß sie gut verarbeitbar sind, gute mechanische Eigenschaften und eine hohe Schlagzähigkeit und eine hohe Wärmeformbeständigkeit aufweisen. Außerdem ist keine Delaminierung in daraus hergestellten Formteilen zu beobachten.

Die Komponente A besteht zu 50 bis 100 Gew.% aus Polyphenylenether und zu 0 bis 50 Gew.% aus einem von der Komponente C) verschiedenen Styrolpolymerisat.

Die in den erfindungsgemäßen Formmassen in A enthaltenen Polyphenylenether sind an sich bekannt. Es handelt sich um Verbindungen auf Basis von substituierten, insbesondere disubstituierten Polyphenylenoxiden, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenoxide verwendet, wobei vorteilhaft mindestens 50 Einheiten miteninander verknüpft sind. Als Beispiele für Substituenten sind halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl,-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfals durch halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,5-dilauryl-1,4-phenylen)oxid, Poly(diphenyl-1,4-phenylen)-oxid, Poly(2,6-dimethoxi-1,4-phenylen)oxid, Poly(2,6-diethoxi-1,4-phenylen)oxid, Poly(2-methoxi-6-ethoxi-1,4-phenylen)oxid, Poly(2-ethyl-6-stearyloxi-1,4-phenylen)oxid, Poly(2,6-dichlor-1,4-phenylen)oxid, Poly(2-methyl-6-phenyl-1,4-phenylen)oxid, Poly(2,6-dibenzyl-1,4-phenylen)oxid, Poly(2-ethoxi-1,4-phenylen)oxid, Poly(2-chlor-1,4-phenylen)oxid, Poly(2,5-dibrom-1,4-phenylen)oxid. Bevorzugt werden Polyphenylenether eingesetzt, bei denen die Substituenten Alkylreste mit 1 bis 4 Kohlensxtoffatomen sind wie z.B. Poly(2,6-dimethyl-1,4-phenylen)oxid, Poly(2,6-diethyl-1,4-phenylen)oxid, Poly(2-methyl-6-ethyl-1,4-phenylen)oxid, Poly(2-methyl-6-propyl-1,4-phenylen)oxid, Poly(2,6-dipropyl-1,4-phenylen)oxid und Poly(2-ethyl-6-propyl-1,4-phenylen)oxid.

Hinsichtlich der physikalischen Eigenschaften der Polyphenylenether werden solche bevorzugt, die eine Grenzviskosität von 0,4 bis 0,7 dl/g, gemessen in Chloroform bei 30 °C, aufweisen.

Der Anteil der Komponente A) an den erfindungsgemäßen Formmassen ist nicht kritisch, er beträgt jedoch mindestens 5 Gew.%, vorzugsweise 10 bis 89 Gew.%, bezogen auf die Gesamtmasse der Komponenten A) - D). Besonders bevorzugt sind Formmassen, die 20 bis 70 Gew.%, insbesondere 35 bis 60 Gew.% A) enthalten.

Die in Komponente A) verwendeten Polyphenylenether können teilweise durch von der Komponente C) verschiedene Styrolpolymere ersetzt werden. Beispiele für derartige Styrolpolymere sind beispielsweise Polystyrol, Poly-α-methylstyrol oder Poly-p-methylstyrol, von denen Polystyrol bevorzugt wird. Ebenfalls bevorzugt werden Styrolpolymere, die in Gegenwart von 2 bis 20 Gew.% eines kautschukelastischen Polymerisats hergestellt wurden. Dabei sind kautschukartige Polymerisate auf der Basis von Butadien, z.B. Styrol-Butadien-Polymerisate, Polybutadien und ferner Butadien-Styrol-Blockcopolymerisate geeignet. Im Falle der Verwendung von Styrol-Dien-Blockcopolymerisaten, hat es sich als vorteilhaft herausgestellt, wenn bis zu 20 % des Gehalts an Polyphenylenoxid durch Butadien-oder Isopren-Styrol-Blockcopolymerisate oder deren hydrierte Produkte ersetzt werden.

Als Komponente B), enthalten die erfindungsgemäßen Formmassen mindestens einen thermoplastischen Polyester.

Die in den erfindungsgemäßen Formmassen enthaltenen Polyester 8 sind an sich bekannt. Sie besitzen Ketteinenheiten, die einen gegebenenfalls substituierten aromatischen Ring in der Polymerkette enthalten. Beispiele für derartige Substituenten am aromatischen Ring sind Halogene wie Chlor oder Brom und $C_1$-$C_4$-Alkylgruppen wie Methyl-, Ethyl-, Propyl- oder Butylgruppen.

Geeignete Polyester können beispiesweise durch Umsetzung von aromatischen Dicarbonsäuren, deren Estern oder deren esterbildender Derviate mit Dihydroxyverbindungen in an sich bekannter Weise hergestellt werden.

Als Beispiele für aromatische Dicarbonsäuren seien Naphthalindicarbonsäuren, Terephthalsäure und Isophthalsäure oder deren Mischungen genannt. Die aromatischen Dicarbonsäuren oder deren Derivate können teilweise, bevorzugt bis zu 10 Mol%, durch andere Dicarbonsäuren ersetzt werden. Hier seien beispielhaft aliphatische oder cycloaliphatische Dicarbonsäuren wie Adipinsäure, Azelainsäure, Sebacinsäure und Cyclohexandicarbonsäure genannt.

Als Dihydroxyverbindungen werden bevorzugt Glykole mit 2 - 6 C-Atomen, insbesondere Ethylenglykol, Butandiol-1,4, But-2-endiol-1,4, Hexandiol-1,6, Hexandiol-1,4, Cyclohexanidol-1,4, 1,4-Di(hydroxymethyl)-cyclohexan, 2,2-Di)(4'-hydroxyphenyl)propan und Neopentylglykol oder deren Mischungen eingesetzt.

Bevorzugte Polyester sind Polyalkylenterephthalate, die sich von Alkandiolen mit 2 - 6 C-Atomen ableiten. Besonders bevorzugt sind Polyethylenterephthalat und Polybutylenterephthalat. Die relative Viskosität der Polyester liegt im allgemeinen im Bereich von 1,2 bis 1,8, gemessen in 0,5 gew%iger Lösung in einem Phenol/o-Dichlorbenzol-Gemisch (Gewichtsverhältnis 3 : 2) bei 25 °C. Der Anteil der Komponente B) an den erfindungsgemäßen Formmassen unterliegt wie der der Komponente A) keiner besonderen Beschränkung, doch werden ebenfalls mindestens 5 Gew.%, vorzugsweise 10 bis 89 Gew.% des Polyesters, bezogen auf A) bis D) eingesetzt. Besonders bevorzugte Formmassen enthalten 15 bis 70, ganz besonders bevorzugt 25 bis 60 Gew.% eines thermoplastischen Polyesters. Alle Prozentangaben beziehen sich auf die Gesamtmasse der Komponenten A) bis D).

Als weitere Komponente enthalten die erfindungsgemäßen Formmassen mindestens 0,1 Gew.% vorzugsweise 0,1 - 50, insbesondere 0,1 - 40 Gew.% und insbesondere 0,5 - 20 Gew.% eines Copolymerisats C) aus

$C_1$) mindestens 20 Gew.% $\alpha$-Olefinen mit 2 - 8 C-Atomen, Styrol oder substituierten Styrolen der allgemeinen Formel I

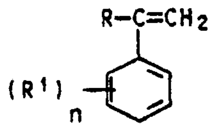

(I)

wobei R und $R^1$ einen Alkylrest mit 1 bis 8 C-Atomen, ein Wasserstoffatom und/oder ein Halogenatom darstellen und n 0, 1, 2 oder 3 ist, oder deren Mischungen

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

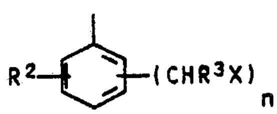

(II)

wobei X ein Halogenatom und $R^2$ und $R^3$ einen Alkylrest mit 1 bis 8 C-Atomen oder ein Wasserstoffatom und n 1, 2 oder 3 ist,

und/oder

$C_4$) mindestens 0,05 Gew.% eines Oxazolin-Gruppen enthaltenden polymerisierbaren Monomeren und

$C_5$) 0 bis 65 Gew.% Acrylnitril, Methacrylnitril und/oder weiteren nicht-ionogenen Comonomeren.

Die Epoxidgruppen, Halogenbenzylgruppen oder Oxazolingruppen tragenden Monomeren bewirken eine Haftungsverbesserung zwischen den Komponenten A) und B) und damit insgesamt eine Verbesserung der Eigenschaften daraus hergestellter Formmassen. Die haftungsverbessernde Wirkung beruht vermutlich auf einer Wechselwirkung der Epoxid-, Halogenbenzylgruppen und/oder Oxazolingruppen mit den Komponenten A) und B). Ob es bei dieser Wechselwirkung zur Ausbildung kovalenter Bindungen kommt, oder ob es sich um physikalische Wechselwirkungen handelt, kann noch nicht mit Sicherheit gesagt werden.

Wie vorstehend ausgeführt, enthält die Komponente C) mindestens 20, vorzugsweise mindestens 70 Gew.% $\alpha$-Olefine mit 2 - 8 C-Atomen, Styrol oder substituierte Styrole ($C_1$) der allgemeinen Formel I oder Mischungen dieser Monomeren. Zusätzlich können bis zu 50 Gew.% Acrylnitril- und/oder Methacrylnitril sowie andere nicht-ionogene Comonomere $C_5$ enthalten sein.

Copolymere, bei denen der Anteil von $C_5$ entfällt, werden jedoch bevorzugt.

Als $\alpha$-Olefine werden bevorzugt solche mit 2 - 6 C-Atomen, insbesondere Ethylen und Propylen oder

deren Mischungen eingesetzt.

Besonders bevorzugt werden Ethylen, Styrol, p-Methylstyrol und α-Methylstyrol als Komponente $C_1$). Unter den substituierten Styrolen der allgemeinen Formel I werden α-Methylstyrol und p-Methylstyrol besonders bevorzugt, es eignen sich jedoch z.B. auch die verschiedenen Ethyl- und Chlorstyrole (m-, o-, p-) um nur einige zu nennen.

Als Epoxidgruppen enthaltende Monomere $C_2$ sind prinzipiell alle Verbindungen geeignet, die eine Epoxidgruppe im Molekül aufweisen. Vorzugsweise werden jedoch Monomere verwendet, die Glycidylgruppen tragen, insbesondere Glycidylacrylat und Glycidylmethacrylat. Es eignen sich jedoch auch Glycidylderivate anderer Säuren und Glycidylallyl- und Vinylether. Diese sind allgemein durch die Struktureinheit

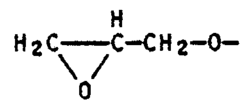

im Molekül charakterisiert.

Im Falle der Verwendung von Epoxidgruppen enthaltenden Monomeren enthalten die Copolymerisate C) vorzugsweise 80 bis 99,5 Gew.%, besonders bevorzugt 90 bis 98 Gew.% α-Olefine mit 2 - 8 C-Atomen, Styrol und/oder substituiertes Styrol und 0,5 bis 20, besonders bevorzugt 2 bis 10 Gew.% Epoxidgruppenenthaltende Monomere. Der Anteil an weiteren copolymerisierbaren Monomeren, falls diese verwendet werden, beträgt vorzugsweise bis zu 10 Gew.%, besonders bevorzugt weniger als 8 Gew.%.

Das Molekulargewicht (Gewichtsmittelwert) der Epoxidruppen enthaltenden Copolymere C) liegt im allgemeinen zwischen 20.000 und 1.000.000, vorzugsweise im Bereich von 40.000 bis 250.000.

Gemäß einer weiteren Ausführungsform wird als Copolymeres C) ein Copolymeres, das aufgebaut ist aus α-Olefinen mit 2 - 8 C-Atomen, Styrol und/oder substituierten Styrolen (I) und Halogenbenzylgruppen tragenden Monomeren, eingesetzt. Unter Halogenbenzylgruppe wird hierin im folgenden folgende Struktureinheit verstanden:

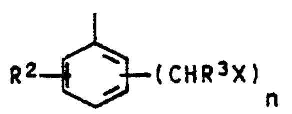

(II)

wobei X Halogen, vorzugsweise Chlor oder Brom, insbesondere Chlor, n = 1, 2 oder 3 ist und $R^2$ und $R^3$ einen Alkylrest mit 1 bis 8 C-Atomen oder ein Wasserstoffatom darstellen. Vorzugsweise werden die Halogenbenzylgruppen durch Chlormethyl-Vinylbenzol (meta, para oder Gemische dieser Isomeren) eingeführt. Wie bei den Epoxigruppen enthaltenden Verbindungen ist jedoch nur die Halogenbenzylgruppe als solche entscheidend, so daß prinzipiell alle mit $C_1$) copolymerisierbaren Verbindungen dieser Struktureinheit geeignet sind.

Hinsichtlich der verwendeten substituierten Styrole und den möglichen teilweisen Ersatz durch andere Monomere gilt das vorstehend für die epoxidgruppenhaltigen Copolymere Gesagte.

Gemäß einer besonders bevorzugten Ausführungsform ist das Copolymerisat C) aufgebaut aus 80 bis 99,5, besonders bevorzugt 95 bis 99,5 Gew.% Styrol und/oder substituiertem Styrol und 0,05 bis 20 Gew.%, besonders bevorzugt 0,5 bis 5 Gew.% des Halogenbenzylgruppen tragenden Monomeren. Der Anteil weiterer copolymerisierbarer Monomerer kann, falls vorhanden, bis zu 10 Gew.% betragen.

Die Halogenbenzylgruppen enthaltenden Copolymere C) weisen in der Regel ein Molekulargewicht von 5000 bis 1.000.000, vorzugsweise von 20.000 bis 250.000 und besonders bevorzugt von 40.000 bis 200.000 auf.

Gemäß einer weiteren Ausführungsform enthält das Copolymerisat C) als Komponente $C_4$) mindestens ein Oxazolingruppen enthaltendes polymerisierbares Monomer.

Diese Monomeren haben vorzugsweise die allgemeine Formel II

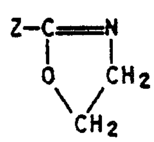

II

wobei Z eine polymerisierbare Doppelbindung enthält.

Bevorzugte Substituenten Z sind

$CH_2=CR^2-$

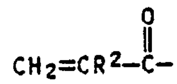

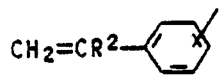

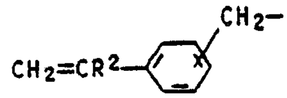

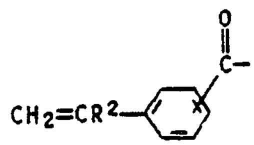

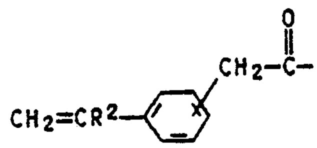

und 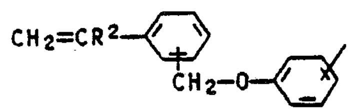

wobei $R^2$ ein Wasserstoffatom oder eine Alkyl- oder Alkoxygruppe mit 1 bis 6 C-Atomen sein kann, z.B. Methyl, i- und n-Propyl oder Butyl-, um nur einige zu nennen.

Besonders bevorzugte Monomere $C_4$) sind Vinyloxazoline der allgemeinen Formel III

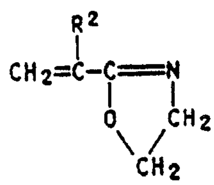 III

wobei $R^2$ die zuvor angegebene Bedeutung hat und vorzugsweise ein Wasserstoffatom oder eine Methylgruppe ist.

Als Beispiele für die Komponente $C_5$), die in Mengen bis zu 65, vorzugsweise bis zu 50 und insbesondere bis zu 20 Gew.%, bezogen auf C), eingesetzt werden kann, seien Ester der Acrylsäure und Methacrylsäure mit 1 - 20 C-Atomen im Alkoholrest, Acrylamide, Methacrylamide, Vinylester, Vinylether, Acrylnitril, Methacrylnitril, sowie Diene wie Buta-1,3-dien und Isopren genannt.

Als bevorzugte Beispiele für die Komponente C sind Styrol/Glycidyl(methacrylat)-Copolymere, die ggf. $C_1$-$C_4$-(Meth)-acrylsäureester enthalten und Ethylen/Glycidyl(meth)acrylat-Copolymere, die ebenfalls ggf. $C_1$-$C_4$-(Meth)acrylsäureester enthalten können, zu nennen.

Die Herstellung der erfindungsgemäß eingesetzten Copolymerisate C) kann auf an sich bekannte Weise durch Masse-, Lösungs-, Emulsions- oder Suspensionspolymerisation sowohl kontinuierlich als auch ansatzweise erfolgen. Vorzugsweise polymerisiert man die Monomeren in einem geeigneten Lösungsmittel, wie z.B. Ethylbenzol. In einer besonders bevorzugten Ausführungsform werden die Monomeren, z.B. Styrol und Chlormethylvinylbenzol, bei 120 bis 150 °C mit Radikalstarter oder insbesondere thermisch, d.h. ohne Initiator, kontinuierlich bei erhöhtem Druck polymerisiert.

Die Komponente C) kann auch schlagzäh modifiziert sein, bevorzugt ist C) jedoch nicht - schlagzähmodifiziert. Solche Polymere sind dem Fachmann allgemein als schlagzähes Polystyrol bzw. die entsprechenden Styrolderivate bekannt. Dabei werden die Polymeren in Gegenwart eines schlagzäh modifizierenden Kautschuks hergestellt oder mit gepfropften Kautschuken abgemischt. Als kautschukartige Polymere sind z.B. Polybutadien, Styrol-Butadien-, Styrol-b-Butadien, Acrylnitril-Butadien, Ethylen-Propylen-, Polyacrylat und Polyisopren-Kautschuke zu nennen.

Diese können in ungepfropfter Form auch zur Schlagzähmodifizierung der Komponente A) eingesetzt werden.

In diesem Fall kann zusätzlich zu den Komponenten A) und B) ein schlagzäh modifizierender Kautschuk D) zugesetzt werden. Beispielsweise sind hier zu nennen: Polybutadienkautschuke, Acrylatkautschuke, Styrol-Butadien-Kautschuke, Polybuten-Kautschuke, hydrierte Styrol-Butadien-Kautschuke, Acrylnitril-Butadien-Kautschuke, Ethylen-Propylen-Kautschuke, Polyisopren-Kautschuke, styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere, wie z.B. AB, ABA, ABA-Tapering und Stern-Blockcopolymere sowie ähnliche Isopren-Blockpolymerisate und hydrierte oder teilweise hydrierte Blockcopolymerisate. Von diesen werden Blockcopolymerisate, die Styrol und Butadien enthalten, bevorzugt.

Besonders bevorzugt werden Kautschuke verwendet, die üblicherweise für die Schlagzähmodifizierung von Polyestern eingesetzt werden.

Hier seien insbesondere Pfropfcopolymerisate aus

$D_1$) 60 bis 99 Gew.% einer elastomeren Komponente, aufgebaut aus Acrylsäureestern, Methacrylsäureestern und/oder konjugierten Dienen, sowie gewünschtenfalls weiteren Comonomeren, als Pfropfgrundlage und

$D_2$) 1 bis 40, vorzugsweise 2 - 10 Gew.% eines Epoxidgruppen-enthaltenden Monomeren als Pfropfauflage genannt.

Die elastomere Komponente (Kautschukkomponente $D_1$) weist im allgemeinen eine Glasübergangstemperatur von unter 0 °C, vorzugsweise von unter -20 °C auf. Bevorzugt werden als Kautschukkomponenten Homopolymerisate aus Alkylacrylaten und/oder Methacrylalkylaten mit 1 bis 8 C-Atomen im Alkylrest und/oder Homo- und/oder Copolymerisate konjugierter Diene, z.B. 1,3-Butadien und Isopren verwendet. Als besonders bevorzugtes Beispiel sei eine Kautschukkomponente (Elastomer) aufgebaut aus Polybutadien und/oder Poly-n-butylacrylat genannt.

Falls gewünscht, können bei der Herstellung der elastomeren Komponente noch weitere Comonomere, vorzugsweise vinylaromatische Monomere mit bis zu 12 C-Atomen, wie z.B. Styrol oder Mischungen aus Styrol und Acrylnitril eingesetzt werden.

Als Komponente $D_2$) eignen sich prinzipiell alle Epoxidgruppen-enthaltenden Monomere, die auf die Pfropgrundlage $D_1$) aufgepfropft werden können.

Nur stellvertretend für die Vielzahl der geeigneten, Epoxidgruppen-enthaltenden Monomeren seien hier Glycidylderivate, insbesondere Glycidylacrylsäureester und/oder Glycidylmethacrylsäureester genannt, die wegen ihrer leichten Verfügbarkeit bevorzugt werden.

Verfahren zur Herstellung solcher Pfropfcopolymerisate sind an sich bekannt.

Der Anteil des schlagzäh modifizierenden Kautschuks D) ist nicht kritisch. Im allgemeinen beträgt er jedoch nicht mehr als 40 Gew.%, bezogen auf die Gesamtmasse der Komponenten A) bis D), bevorzugt 4 bis 20 Gew.%.

Als weitere Komponente E können die erfindungsgemäßen thermoplastischen Formmassen übliche Zusatzstoffe und Verarbeitungshilfsmittel in wirksamen Mengen enthalten. Deren Anteil beträgt vorzugsweise bis zu 50, besonders bevorzugt bis zu 20 Gew.%. Nur beispielsweise seien hier genannt Hitze-und Lichtstabilisatoren, Gleit- und Entformungsmittel, Färbemittel, wie z.B. Farbstoffe und Pigmente, Verstärkungsmittel wie Glasfasern, Asbestfasern, Kohlenstoff-Fasern, aromatische Polyamidfasern und/oder Füllstoffe, Gipsfasern, synthetische Kalziumsilikate, Kaolin, kalziniertes Kaolin, Wollastonit, Talkum, Kreide, ferner auch Flammschutzmittel wie anorganische und organische Phosphorverbindungen z.B. Phosphate, Phosphorsäureester, Phosphorigsäureester, Phosphinsäureester, Phosphonigsäureester und organische Phosphinoxide. Darüber hinaus können auch weitere niedermolekulare oder hochmolekulare Polymere als Zusatzstoffe in den erfindungsgemäßen Formmassen enthalten sein.

Die Herstellung der erfindungsgemäßen thermoplastischen Formmassen erfolgt zweckmäßigerweise durch Mischen der Komponenten bei Temperaturen im Bereich von 250 bis 320 °C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich durch Spritzguß oder Extrusion Formkörper mit guten mechanischen Eigenschaften herstellen.

Falls nicht anders angegeben, beziehen sich im folgenden alle Prozentangaben auf das Gewicht.

Beispiel 1

Erfindungsgemäße Formmassen wurden unter Verwendung folgender Komponenten hergestellt:

Komponente A

Poly-(2,6-dimethyl-1,4-phenylen)ether mit einer relativen Viskosität von 0,56 (gemessen in 1 gew.%iger Lösung in Chloroform bei 30 °C)

Komponente B

Polybutylenterephthalat mit einer relativen Viskosität von 1,60, gemessen in einer 0,5 gew.%igen Lösung in einem Phenol/o-Dichlorbenzolgemisch (Gewichtsverhältnis 3 : 2) bei 25 °C.

Komponente C

C/1: Styrol/Glycidylmethacrylat-Copolymerisat (95 Gew.% Styrol, 5 % Glycidylmethacrylat), hergestellt durch kontinuierliche Lösungspolymerisation bei 140 °C und 5 h Verweilzeit unter Verwendung von 10 Gew.% Ethylbenzol (bezogen auf Gesamtmonomere); Gewichtsmittelwert des Molekulargewichts $M_w$ = 95000

C/2: Styrol/Methylacrylat/Glycidylmethacrylat-Copolymerisat (Monomerverhältnis 85/12,5/2,5 Gew.%), hergestellt wie bei C/1; $M_w$ = 120000

C/3: Ethylen/n-Butylacrylat/Glycidylmethacrylat-Terpolymerisat (Monomerverhältnis 70/26/4 Gew.%), hergestellt im Autoklaven bei erhöhter Temperatur und erhöhtem Druck; Schmelzindex (MFI) bei 190 °C und 2,16 kg Belastung (DIN 53 735) = 8 g/10 min.

C/4: Styrol/Glycidylmethacrylat-Copolymer (96 Gew.% Styrol, 4 Gew.% Glycidylmethacrylat), hergestellt durch Emulsionspolymerisation mit $K_2S_2O_8$ als Starter.

Komponente D

$D_1$): Styrol-Butadien-Styrol-Blockcopolymerisat hergestellt durch anionische Polymerisation (32 Gew.% Styrol, 68 Gew.% Butadien) mit einem $M_W$ = 110000 (Gewichtsmittelwert)

$D_2$): Ein Polybutadienlatex wurde durch Polymerisation von 60 Gewichtsteilen Butadien in Gegenwart einer Lösung von 0,5 Teilen tert.-Dodecylmercaptan, 0,7 Teilen Kalium-$C_{14}$-alkylsulfonat als Emulgator, 0,2 Teilen Kaliumperoxodisulfat und 0,2 Teilen Natriumpyrophosphat in 80 Teilen Wasser bei 65 °C hergestellt. Nach Beendigung der Polymerisation wurde der Polymerisationsautoklav entspannt; der Umsatz betrug 98 %.

Die mittlere Teilchengröße des so erhaltenen Polybutadienlatex lag bei 0,1 µm. Dieser Latex wurde durch Zusatz von 25 Gewichtsteilen einer Emulsion eines Copolymeren aus 96 Gewichtsteilen Ethylacrylat und 4 Teilen Acrylsäureamid (Feststoffgehalt der Emulsion: 10 Gew.%) agglomeriert, wobei ein Polybutadienlatex mit einer mittleren Teilchengröße von 0,3 bis 0,4 µm entstand. 65 Gew.Tl. des so erhaltenen Polybutadien-Latex wurden mit 30 Gew.Tl. einer Mischung aus Styrol und Acrylnitril (Verhältnis 70 : 30) und 50 Gew.Tl. Wasser gemischt und unter Rühren nach Zusatz von 0,08 Gew.Tl. Kaliumpersulfat und 0,05 Gew.Tl. Laurylperoxid 3 Stunden auf 65 °C erhitzt. Anschließend wurden ohne weitere Zusatzstoffe 4,8 Gew.Tl. Methylmethacrylat und 0,2 Gew.Tl. Hydroxyethylacrylat während einer Stunde zugegeben, wobei die Temperatur während der Zugabe bei 65 °C lag. Das so hergestellte Pfropfpolymerisat wurde mit Hilfe einer Magnesiumsulfatlösung bei 95 °C aus der Dispersion gefällt, mit Wasser gewaschen und im warmen Luftstrom getrocknet.

Komponente E (weiterer Zusatzstoff)

E) Polystyrol (PS 144 C, Fa. BASF, MFI 200 °C/5,0 kg = 24 g/10 Min).

Die Komponenten A) - D) und ggf. E) wurden auf einem Zweischneckenextruder der Firma Werner und Pfleiderer bei 280 °C gemischt und in ein Wasserbad extrudiert. Nach Granulierung wurden im Spritzguß Prüfkörper zur Bestimmung der Schlagzähigkeit und der Kerbschlagzähigkeit (nach DIN 53 453) hergestellt.

Die Zusammensetzung der Formmassen und die Ergebnisse der Messungen sind in Tabelle 1 dargestellt.

Tabelle 1: (alle Mengenangaben in Gew.%)

| Beispiel-Nr. | Komponente A | B | C | D | E | Schlagzähigkeit kJ/m² (23°C) | Kerbschlagzähigkeit kJ/m² (23°C) |
|---|---|---|---|---|---|---|---|
| 1V* | 50 | 50 | - | - | - | 15 | 0,9 |
| 2 | 45,5 | 45,5 | 9,0 C/1 | - | - | 31 | 2,8 |
| 3V* | 47,8 | 39,1 | - | 8,7 $D_1$<br>4,4 $D_2$ | - | 20 | 1,3 |
| 4 | 44,0 | 36,0 | 8,0 C/1 | 8,0 $D_1$<br>4,0 $D_2$ | - | kein Bruch | 8,6 |
| 5 | 44,0 | 36,0 | 8,0 C/1<br>4,0 C/3 | 6,4 $D_1$<br>1,6 $D_2$ | - | kein Bruch | 14,1 |
| 6 | 36,9 | 45,1 | 9,8 C/2 | 8,2 $D_2$ | - | kein Bruch | 11,7 |
| 7 | 24,0 | 56,0 | 5,6 C/2 | 10,4 $D_1$<br>4,0 $D_2$ | | kein Bruch | 14,6 |
| 8V* | 33,6 | 50,4 | - | 7,6 $D_2$ | 8,4 | 32 | 3,0 |
| 9 | 34,2 | 51,3 | 6,8 C/1 | 7,7 $D_2$ | - | kein Bruch | 10,1 |
| 10 | 32,5 | 48,8 | 4,9 C/1 | 7,3 $D_1$<br>3,3 $D_2$ | 3,2 | kein Bruch | 12,1 |
| 11 | 34,4 | 42,0 | 4,5 C/4 | 13,7 $D_1$<br>5,4 $D_2$ | - | kein Bruch | 17,1 |

* Vergleichsbeispiele

**Ansprüche**

1. Thermoplastische Formmassen, enthaltend als wesentliche Komponenten

A) mindestens 5 Gew.% einer Polymerkomponente bestehend aus 50 bis 100 Gew.% Polyphenylenether und 0 bis 50 Gew.% eines von der Komponente C) verschiedenen Styrolpolymerisates

B) mindestens 5 Gew.% eines Polyesters,

C) mindestens 0,1 Gew.% eines Copolymerisats aufgebaut aus

$C_1$) mindestens 20 Gew.% α-Olefinen mit 2 - 8 C-Atomen, Styrol oder substituierten Styrolen der allgemeinen Formel I

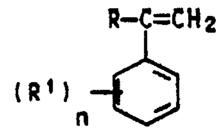
(I)

wobei R und $R^1$ einen Alkylrest mit 1 bis 8 C-Atomen, ein Wasserstoffatom und/oder ein Halogenatom darstellen und n 0, 1, 2 oder 3 ist, oder Mischungen dieser Monomeren,

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

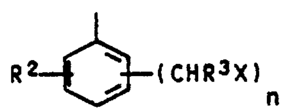
(II)

wobei X ein Halogenatom und $R^2$ und $R^3$ einen Alkylrest mit 1 bis 8 C-Atomen oder ein Wasserstoffatom darstellen und n 1, 2 oder 3 ist, und/oder

$C_4$) mindestens 0,05 Gew.% eines Oxazolin-Gruppen enthaltenden polymerisierbaren Monomeren, und

$C_5$) 0 bis 65 Gew.% Acrylnitril, Methacrylnitril und/oder weiteren Comonomeren, und

D) 0 bis 40 Gew.% eines schlagzäh modifizierenden Kautschuks.

2. Thermoplastische Formmassen nach Anspruch 1, dadurch gekennzeichnet, daß das Copolymerisat C aufgebaut ist aus

$C_1$) 70 bis 99,5 Gew.% α-Olefinen mit 2 - 8 C-Atomen, Styrol oder substituierten Styrolen der allgemeinen Formel I oder deren Mischungen

$C_2$) 0,5 bis 20 Gew.% des Epoxygruppen enthaltenden Monomeren, und

$C_5$) 0 bis 30 Gew.% Acrylnitril, Methacrylnitril oder Alkylestern der Acrylsäure oder Methacrylsäure mit 1 - 4 C-Atomen

3. Thermoplastische Formmassen nach Anspruch 1, dadurch gekennzeichnet, daß das Copolymerisat C) aufgebaut ist aus

$C_1$) 70 bis 99,95 Gew.% α-Olefinen mit 2 - 8 C-Atomen, Styrol oder substituierten Styrolen der allgemeinen Formel I oder deren Mischungen

$C_3$) 0,05 bis 20 Gew.% des Halogenbenzylgruppen enthaltenden Monomeren mit der Struktureinheit II und

$C_5$) 0 bis 20 Gew.% Acrylnitril, Methacrylnitril oder Alkylestern der Acrylsäure oder Methacrylsäure mit 1 - 4 C-Atomen

4. Thermoplastische Formmassen nach Anspruch 1, dadurch gekennzeichnet, daß das Copolymerisat C) aufgebaut ist aus

$C_1$) 70 bis 99,95 Gew.% Styrol und/oder substituierten Styrolen der allgemeinen Formel I,

$C_4$) 0,05 bis 10 Gew.% des Oxazolin-Gruppen enthaltenden polymerisierbaren Monomeren und

$C_5$) 0 bis 20 Gew.% weiteren Comonomeren.

5. Thermoplastische Formmassen nach mindestens einem der Ansprüche 1 bis 4, dadurch gekennzeichnet, daß das Copolymerisat C ein Molekulargewicht $M_w$ im Bereich von 20 000 bis 1 000 000 hat.

6. Thermoplastische Formmassen nach mindestens einem der Ansprüche 1 bis 5, dadurch gekennzeichnet, daß die Komponente D ein Blockcopolymeres aus Styrol und Butadien ist und in Mengen von 4 bis 20 Gew.% vorhanden ist.

7. Formkörper, enthaltend als wesentliche Komponente Formmassen nach mindestens einem der Ansprüche 1 bis 6.